# EUROPÄISCHE PATENTANMELDUNG

(11) **EP 4 455 508 A1**
(43) Veröffentlichungstag der Anmeldung: **30.10.2024**
(21) Anmeldenummer: 24163186.0
(22) Anmeldetag: 13.03.2024
(51) Int. Cl.: F16G 1/10, F16G 1/12, B65G 43/02

(54) **RIEMEN MIT SENSOREINRICHTUNG ZUR ERFASSUNG EINER MECHANISCHEN EIGENSCHAFT DES RIEMENS**

(30) Priorität: 24.04.2023 DE 102023203739
(71) Anmelder: ContiTech Deutschland GmbH, 30175 Hannover (DE)
(72) Erfinder: Dr. Kneer, Janosch, 30419 Hannover (DE); Schleuniger, Juerg, 30419 Hannover (DE); Kegel, Isabell, 30419 Hannover (DE); Toguem Fokoua, Stéphane, 30419 Hannover (DE); Benz, Nicolai, 30419 Hannover (DE)
(74) Vertreter: Continental Corporation

(57) **Zusammenfassung**

Die Erfindung betrifft einen Riemen (10) enthaltend ein polymeres Material insbesondere mit darin eingebetteten und sich in Längsrichtung des Riemens erstreckenden Zugträgern (11), mit einem Sensorelement (20) zur Erfassung einer mechanischen Eigenschaft des Riemens (10), wobei das Sensorelement (20) eine gedruckte Messleiterstruktur (22) mit einer von der mechanischen Eigenschaft des Riemens (10) abhängigen elektrischen Eigenschaft aufweist, deren Größe erfassbar ist.

## Beschreibung

Die vorliegende Erfindung betrifft einen Riemen mit den Merkmalen des Anspruchs 1. Ferner betrifft die Erfindung eine Antriebsvorrichtung mit einem solchen als Antriebsriemen ausgebildeten Riemen und eine Fördervorrichtung mit einer solchen Antriebsvorrichtung.

Auf verschiedenen technischen Gebieten werden Riemen z.B. als Antriebsriemen zur Übertragung von Zugkräften und/oder als Fördergurt zum Transport von Fördergut eingesetzt. Antriebsriemen werden in vielen Anwendungsbereichen zum Antreiben und Übertragen von Kräften in Maschinen, Transportmitteln, Fahrzeugen, etc. eingesetzt, sowohl als umlaufende Antriebsriemen in einem Zugriementrieb bzw. Riemengetriebe als auch als Antriebsriemen endlicher Länge in einem Linearantrieb oder in einer Aufzugsanlage.

Die im Betrieb auf die Riemen wirkenden Belastungen führen mit der Zeit zum Verschleiß der Riemen. Um einen verschleißbedingten Ausfall des Riemens zu vermeiden ist es vorteilhaft, Verschleißerscheinungen am Riemen frühzeitig zu erkennen. Auf diese Weise kann ein defekter Riemen rechtzeitig repariert oder ausgetauscht werden.

Zur Überwachung von Verschleißerscheinungen des Riemens wird in der EP 0 787 669 A2 vorgeschlagen, den Riemen mit darin eingebetteten auslesbaren Funktranspondern zu versehen, die als Reaktion auf eine kritische Längenänderung des Riemens ihren Funktionszustand ändern. Durch Auslesen der Funktransponder mittels eines Lesegerätes kann somit ein Verschleiß des Riemens erkannt und geeignete Gegenmaßnahmen getroffen werden. Nachteilig an diesem System ist, dass für ein zuverlässiges Monitoring des gesamten Riemens eine Vielzahl von Transpondern notwendig ist, die an verschiedenen Längen- und Breitenpositionen des Riemens platziert sind. Auch ist die Implementierung eines von der Längenänderung abhängigen Funktionszustandes der Transponder nur mit hohem technischem Aufwand erreichbar.

Aufgabe der vorliegenden Erfindung ist es daher, einen Riemen der eingangs genannten Art bereitzustellen, mit dem sich eine zuverlässige Zustandsüberwachung zumindest einer mechanischen Eigenschaft des Riemens in einfacher Weise realisieren lässt. Insbesondere soll ein Riemen bereitgestellt werden, mit dem die Nachteile des Standes der Technik zumindest teilweise verringert bzw. vermieden werden können.

Diese Aufgabe wird durch einen Riemen mit den Merkmalen des Anspruchs 1 gelöst. Bevorzugte Merkmale sind Gegenstand der abhängigen Ansprüche. Weitere Vorteile und Merkmale sind der allgemeinen Beschreibung sowie den Ausführungsbeispielen zu entnehmen.

Gegenstand der vorliegenden Erfindung ist auch eine Antriebsvorrichtung mit den Merkmalen des Anspruchs 9 sowie eine Fördervorrichtung mit den Merkmalen des Anspruchs 11.

Der erfindungsgemäße Riemen, insbesondere Antriebsriemen oder Fördergurt, enthält ein polymeres Material insbesondere mit darin eingebetteten und sich in Längsrichtung des Riemens erstreckenden Zugträgern. Die Zugträger enthalten insbesondere zumindest ein Metall (z.B. Stahldrähte), zumindest ein Polymer (z.B. Aramid), Kohlenstofffasern und/oder Glasfasern. Der Riemen zeichnet sich durch ein insbesondere streifenförmiges Sensorelement zur Erfassung einer mechanischen Eigenschaft des Riemens aus. Vorzugsweise ist das Sensorelement an oder in dem Riemen angeordnet. Insbesondere erstreckt sich das Sensorelement in Längsrichtung des Riemens. Das Sensorelement weist eine gedruckte Messleiterstruktur mit einer von der mechanischen Eigenschaft des Riemens abhängigen elektrischen Eigenschaft auf, deren Größe erfassbar ist.

Durch die gedruckte Messleiterstruktur kann ein äußerst flaches und kompaktes Sensorelement mit einer hohen Empfindlichkeit realisiert werden. Das Sensorelement ist dabei ausreichend flexibel und robust herstellbar, so dass es den auf den Riemen wirkenden Belastungen standhält. Auf diese Weise kann das Sensorelement platzsparend unmittelbar an dem Riemen (z.B. an einer flachen Seite des Riemens) befestigt oder in den Riemen eingebettet werden, wodurch der für die Sensorik notwendige Bauraum minimiert wird. Ein weiterer Vorteil des Sensorelements ist, dass dieses sich aufgrund seines simplen Aufbaus in einfacher Weise automatisiert in hoher Stückzahl produzieren lässt.

Für die Leiterbahn(en) der Messleiterstruktur kommen grundsätzlich verschiedene anorganische Materialien (wie z.B. Metalle) und organische Materialien (wie z.B. leitfähige Polymere, Carbon, Graphit, Graphen etc.) sowie Kombinationen davon in Betracht, sofern sie leitfähig sind und sich (z.B. als Tinte oder Paste) mittels Druckverfahren verarbeiten lassen. Vorzugsweise beträgt die Dicke der Leiterbahn(en) der Messleiterstruktur 1 nm bis 50 µm. Auf diese Weise kann eine besonders kompakte Ausgestaltung des Sensorelements realisiert werden. Besonders bevorzugt beträgt die Dicke der Leiterbahn(en) der Messleiterstruktur 500 nm bis 15 µm, so dass diese mittels bewährter Druckverfahren prozesssicher hergestellt werden kann. Als Dicke der Leiterbahn(en) der Messleiterstruktur wird hierbei die quer zur Schichtebene der Trägerschicht oder quer zur flachen Seite des Riemens - im Fall eines Antriebsriemens quer zur Riemenrückenaußenfläche - gemessene Abmessung der Leiterbahn(en) verstanden.

Das Sensorelement kann mit einer Auswerteeinrichtung - kabelgebunden oder funkbasiert - datenübertragend verbunden werden oder verbunden sein, wobei die Auswertevorrichtung dazu ausgebildet ist, die von der mechanischen Eigenschaft des Riemens abhängige elektrische Eigenschaft der Messleiterstruktur zu erfassen und daraus die mechanische Eigenschaft des Riemens zu bestimmen. Beispielsweise können Sensorelement und Auswerteeinrichtung mit entsprechenden Kommunikationsschnittstellen zur drahtlosen Kommunikation versehen sein. Die zur drahtlosen Kommunikation vorgesehene Schnittstelle des Sensorelements kann beispielsweise an dem Riemen angeordnet oder in dem Riemen eingebettet sein. Vorzugsweise umfasst der Riemen eine solche Auswerteeinrichtung.

Als mechanische Eigenschaft des Riemens, die mittels des Sensorelements erfasst werden kann, kommen beispielsweise eine Längenänderung des Riemens oder eines Riemenlängsabschnitts und/oder eine Biegung des Riemens oder des Riemenlängsabschnitts in Betracht. Beispielsweise kann die Auswerteeinrichtung dazu konfiguriert sein, die Anzahl der Längenänderungen und/oder Biegungen des Riemens oder des Riemenlängsabschnitts über die Betriebsdauer aufzuzeichnen und daraus den Verschleißzustand des Riemens zu bestimmen. Ferner kann die Auswerteeinrichtung dazu konfiguriert sein, zu bestimmen, ob es sich bei der erkannten Längenänderung um eine elastische oder plastische Längenänderung handelt. Beispielsweise kann eine plastische Längenänderung dadurch erkannt werden, dass sich die ermittelte Länge des Riemens oder die ermittelte Länge eines Riemenlängsabschnitts dauerhaft gegenüber einer vorbekannten Nominallänge vergrößert hat.

In einer bevorzugten Ausgestaltung des erfindungsgemäßen Riemens weist die Messleiterstruktur eine insbesondere u-förmige Leiterbahn auf, mit der ein elektrischer Widerstand der Leiterbahn als elektrische Eigenschaft der Messleiterstruktur erfasst werden kann. Durch diese Ausgestaltung kann eine kompakte und zuverlässige Messleitergeometrie in einfacher Weise realisiert werden. In einer weiteren bevorzugten Ausgestaltung des erfindungsgemäßen Riemens weist die Messleiterstruktur eine sich in Längsrichtung des Riemens mäanderförmig erstreckende Leiterbahn auf, mit der ein elektrischer Widerstand der Leiterbahn als elektrische Eigenschaft der Messleiterstruktur erfasst werden kann.

In einer weiteren bevorzugten Ausgestaltung des erfindungsgemäßen Riemens weist die Messleiterstruktur zwei sich in Längsrichtung des Riemens erstreckende Elektroden auf, zwischen denen eine Kapazität als elektrische Eigenschaft der Messleiterstruktur erfasst werden kann. Durch diese Ausgestaltung kann eine kompakte und zuverlässige Messleitergeometrie in einfacher Weise realisiert werden. In einer weiteren bevorzugten Ausgestaltung des erfindungsgemäßen Riemens sind die Elektroden als im Wesentlichen parallel verlaufende Leiterbahnen ausgebildet, was in besonders einfacher und kompakter Weise realisiert werden kann, da sich das elektrische Feld zwischen den Elektroden im Wesentlichen parallel zur Schichtebene der Trägerschicht oder parallel zur flachen Seite des Riemens erstrecken kann. In einer weiteren bevorzugten Ausgestaltung des erfindungsgemäßen Riemens sind die als im Wesentlichen parallel verlaufenden Leiterbahnen ausgebildeten Elektroden kammartig ineinandergreifend ausgebildet. Auf diese Weise kann die Empfindlichkeit des Sensorelements weiter erhöht werden. In einer bevorzugten alternativen Ausgestaltung der Erfindung sind die Elektroden als bezüglich der Trägerschicht oder bezüglich der flachen Seite des Riemens übereinander angeordnete und durch ein dielektrisches Material quer zur Trägerschicht bzw. quer zur flachen Seite des Riemens voneinander beabstandete Elektroden ausgebildet.

In einer weiteren bevorzugten Ausgestaltung des erfindungsgemäßen Riemens ist die Messleiterstruktur auf einer flachen Seite des Riemens oder auf einer an der flachen Seite des Riemens befestigten, insbesondere geklebten oder laminierten, flexiblen Trägerschicht des Sensorelements aufgedruckt. Das Aufdrucken unmittelbar auf dem Riemen bietet eine sehr kompakte Lösung, während die Herstellung der Messleiterstruktur auf der Trägerschicht, die anschließend an dem Riemen durch Kleben oder Laminieren befestigt wird, prozesssicher umsetzbar ist. Alternativ kann das Sensorelement mit oder ohne Trägerschicht, auf der die Messleiterstruktur aufgedruckt ist, auch in dem polymeren Material des Riemens eingebettet sein. Ist der Riemen ein Antriebsriemen, ist die Messleiterstruktur bevorzugt direkt auf dem Riemenrücken des Antriebsriemens oder auf einer an dem Riemenrücken des Antriebsriemens befestigten, insbesondere geklebten oder laminierten, flexiblen Trägerschicht des Sensorelements aufgedruckt. Als Riemenrücken wird die nicht kraftübertragende Seite des Antriebsriemens verstanden, die z.B. die den Keilen, Keilrippen, Zähnen oder anderen Kraftübertragungsmitteln abgewandte Seite des Antriebsriemens ist.

Für die Trägerschicht kommen grundsätzlich verschiedene Materialien in Betracht, sofern sie nicht leitfähig und flexibel sind. Vorzugsweise enthält das Material der Trägerschicht zumindest ein Polymer. Bevorzugt ist das Material der Trägerschicht ausgewählt aus der Gruppe bestehend aus Polyamid (PA), z.B. PA6, PA6.6, PA11, PA12, PA6.10, PA6.12, und / oder Copolyamide und / oder Polyester (PES) und / oder Rayon und / oder Polyethylenterephthalat (PET) und / oder Polyethylennaphthalat (PEN) und / oder Polybutylenterephthalat (PBT) und / oder Polycarbonat (PC) und / oder ungesättigtes Polyesterharz (UP) und / oder Poly(1,4-cyclohexandimethylenterephthalat) (PCDT) und / oder Polyvinylalkohol (PVAL) und / oder Polyoxibenzonaphtoat und / oder Polyvinylacetal (PVA) und / oder Polyetheretherketon (PEEK) und / oder Polyethylen-2,6-naphthalat (PEN) und / oder Polyphenylen und / oder Polyphenylenoxid (PPO) und / oder Polyphenylensulfid (PPS) und / oder Polphenylenether und / oder Polybenzoxazol (PBO) und / oder Polyoxadiazol (POD) und / oder Polyetherimid (PEI) und / oder m-Aramid und / oder p-Aramid und / oder Cellulose und / oder Papier und / oder Basalt und / oder Keramik und / oder Wolle und / oder Baumwolle und / oder Polypropylen und / oder Polyethylen und / oder Melamin und / oder modifizierte Viskose und / oder hochkristalline Polymerfasern und / oder Fluorpolymere, wie bspw. Fluorsilikon, Polytetrafluorethylen (PTFE) und Perfluorethylenpropylen (FEP), und / oder Fluor-Copolymere und / oder Styrol-Butadien-Kautschuk (SBR) und / oder Ethylen-Propylen-Dien-Kautschuk (EPDM).

Bevorzugt ist das Material der Trägerschicht ein thermoplastisches Polyurethan (TPU). TPU ist im Vergleich zu anderen Substraten besonders elastisch, dehnfähig, abriebfest und reißfest, beständig gegenüber Ölen und Schmierstoffen und hat ein geringes Gewicht. Ferner zeigt TPU eine gute Bedruckbarkeit und lässt sich gut mit anderen polymeren Materialien, aus denen der Riemen aufgebaut sein kann, verkleben (z.B. verschweißen).

Insbesondere weist die Trägerschicht eine Schichtdicke von 1 µm bis 500 µm, bevorzugt von 5 µm bis 250 µm, besonders bevorzugt von 10 µm bis 50 µm, auf. Auf diese Weise kann eine besonders kompakte Ausgestaltung des Sensorelements realisiert werden. Gleichzeitig kann das Gewicht des erfindungsgemäßen Sensorelements geringgehalten werden.

In einer weiteren bevorzugten Ausgestaltung des erfindungsgemäßen Riemens weist das Sensorelement eine auf der gedruckten Messleiterstruktur angeordnete, insbesondere gedruckte Isolationsschicht enthaltend ein dielektrisches Material auf. Die Messleiterstruktur wird auf diese Weise durch die Isolationsschicht und ggf. weitere Schichten vor äußeren Einflüssen geschützt. Bevorzugt sind die Zwischenräume zwischen den Strukturen der Messleiterstruktur, wie Leiterbahnen, mit dem dielektrischen Material der Isolationsschicht gefüllt. Dies kann beim Herstellen der Isolationsschicht mittels Druckverfahren in einfacher Weise realisiert werden.

Für die Isolationsschicht kommen grundsätzlich verschiedene Materialien in Betracht, sofern sie nicht leitfähig (d.h. dielektrisch) sind. Vorzugsweise enthält das Material der Isolationsschicht zumindest ein Polymer. Beispielsweise kann ein vernetzbarer oder Lösemittel-basierter Lack oder ein Folienlaminat, bestehend aus einer geeigneten Folie sowie einer Haftschicht (chemisch-vernetzbare Schicht oder PSA-Kleber), z.B. PET-Folie, als Isolationsschicht verwendet werden. Eine Isolationsschicht kann hierbei besonders dünn und mittels Druckverfahren besonders effizient und prozesssicher realisiert werden. Vorzugsweise beträgt die Schichtdicke der Isolationsschicht 100 nm bis 800 µm, bevorzugt 1 µm bis 100 µm, besonders bevorzugt 1 µm bis 10 µm. Bevorzugt wird für die Isolationsschicht dasselbe Material verwendet wie für die Trägerschicht. Vorzugsweise ist die Messleiterstruktur in dem dielektrischen Material der Isolationsschicht eingebettet, wodurch die Messleiterstruktur besser vor äußeren Einflüssen geschützt ist.

In einer weiteren bevorzugten Ausgestaltung des erfindungsgemäßen Riemens weist die Sensoreinrichtung eine auf der Isolationsschicht angeordnete, insbesondere gedruckte Abschirmungsschicht, die ein elektrisch leitfähiges Material enthält, und optional eine auf der Abschirmungsschicht angeordnete, insbesondere gedruckte Schutzschicht, die ein dielektrisches Material enthält, auf. Durch die Abschirmungsschicht können auf das System wirkende äußere Störsignale wirksam unterdrückt werden, wodurch eine zuverlässige Erfassung der elektrischen Eigenschaft der Messleiterstruktur sichergestellt wird. Die Abschirmungsschicht bzw. eine darin enthaltene Abschirmungsstruktur ist durch die Isolationsschicht von der Messleiterstruktur elektrisch isoliert.

Für die Abschirmungsschicht kommen grundsätzlich verschiedene anorganische Materialien (wie z.B. Metalle) und organische Materialien (wie z.B. leitfähige Polymere, Carbon, Graphit, Graphen etc.) sowie Kombinationen davon in Betracht, sofern sie leitfähig sind.

In einer bevorzugten Ausgestaltung der Erfindung enthält die Abschirmungsschicht eine gedruckte leitfähige, insbesondere metallische Abschirmungsstruktur. Für die Abschirmungsstruktur kommen grundsätzlich verschiedene anorganische Materialien (wie z.B. Metalle) und organische Materialien (wie z.B. leitfähige Polymere, Carbon, Graphit, Graphen etc.) sowie Kombinationen davon in Betracht, sofern sie leitfähig sind und sich (z.B. als Tinte oder Paste) mittels Druckverfahren verarbeiten lassen. Vorzugsweise beträgt die Dicke der Abschirmungsstruktur 1 nm bis 50 µm. Auf diese Weise kann eine besonders kompakte Ausgestaltung des Sensorelements realisiert werden. Besonders bevorzugt beträgt die Dicke der Abschirmungsstruktur 500 nm bis 15 µm, so dass die Abschirmungsstruktur mittels bewährter Druckverfahren prozesssicher hergestellt werden kann. Vorzugsweise ist das Material der Abschirmungsstruktur identisch mit dem Material der Leiterbahn(en) der Messleiterstruktur, was die Herstellung des Sensorelements vereinfacht.

In Abhängigkeit des jeweiligen Einsatzgebietes des Antriebsriemens und der erwarteten Störsignale haben sich diverse Abschirmungsgeometrien als besonders vorteilhaft erwiesen. In einer bevorzugten Ausgestaltung der Erfindung ist die Abschirmungsstruktur in zumindest einem Längsabschnitt des Sensorelements als vollflächige Schicht ausgebildet. In einer weiteren bevorzugten Ausgestaltung der Erfindung ist die Abschirmungsstruktur in zumindest einem Längsabschnitt des Sensorelements als flexibles Lochgitter mit einer Vielzahl von Löchern ausgebildet, insbesondere wobei die Löcher runde, elliptische oder polygone (insbesondere rechteckige, viereckige und/oder hexagonale) Formen aufweisen und/oder benachbarte Lochreihen zueinander versetzt angeordnet sind. Derartige Lochstrukturen lassen sich in einfacher Weise mittels bewährter Druckverfahren zuverlässig herstellen, was gegenüber einer vollflächigen Schicht die Kosten und das Gewicht des Sensorelements senkt. Ferner kann durch Anpassung der Anordnung und der Größe der Löcher die Abschirmwirkung der Abschirmungsstruktur gezielt auf die abzuschirmenden Störsignale abgestimmt werden.

Für die Schutzschicht kommen grundsätzlich verschiedene Materialien in Betracht, sofern sie nicht leitfähig und ausreichend undurchlässig für z.B. Sauerstoff und/oder Feuchtigkeit sind. Vorzugsweise enthält das Material der Schutzschicht zumindest ein Polymer. Beispielsweise kann ein vernetzbarer oder Lösemittel-basierter Lack oder ein Folienlaminat, bestehend aus einer geeigneten Folie sowie einer Haftschicht (chemisch-vernetzbare Schicht oder PSA-Kleber), z.B. PET-Folie, als Schutzschicht verwendet werden. Eine Lackschicht kann hierbei besonders dünn und mittels Druckverfahren besonders effizient und prozesssicher realisiert werden. Vorzugsweise beträgt die Schichtdicke der Schutzschicht 100 nm bis 800 µm, bevorzugt 1 µm bis 100 µm, besonders bevorzugt 1 µm bis 10 µm. Bevorzugt wird für die Schutzschicht dasselbe Material verwendet wie für die Trägerschicht.

In einer weiteren bevorzugten Ausgestaltung des erfindungsgemäßen Riemens weist das Sensorelement, eine insbesondere von der Isolationsschicht bedeckte, gedruckte Signalleiterstruktur auf, wobei die Signalleiterstruktur zumindest eine sich in Längsrichtung des Riemens erstreckende Leiterbahn mit zwei in Längsrichtung des Riemens voneinander beabstandeten Enden, zwischen denen Steuersignale übertragbar sind, aufweist. Bevorzugt ist die Signalleiterstruktur auf der Trägerschicht des Sensorelements aufgedruckt. Insbesondere bei Linearantrieben werden Teile der jeweiligen Vorrichtung über die darin verwendeten Riemen bewegt, beispielsweise bei einem in mehrere Richtungen bewegten Schlitten einer Arbeitsmaschine (z.B. einer Fräsmaschine oder einem 3D-Drucker). Bei solchen Linearantrieben werden zur Übertragung von Mess- und/oder Steuersignalen zwischen dem bewegten Teil der Arbeitsmaschine und dem Antrieb bzw. der zentralen Steuerungseinrichtung Signalleitungen üblicherweise in einer Energieführungskette oder Schleppkette, häufig mit dem Handelsnamen "Kabelschlepp" bezeichnet, mitgeführt. Eine in das Sensorelement integrierte Signalleiterstruktur bietet eine vorteilhafte Kombinationslösung, bei der neben der Zustandsüberwachung des Riemens auch die Übertragung von Mess- und/oder Steuersignalen ermöglicht wird. Dadurch kann Bauraum und Wartungsaufwand für eine Energieführungskette eingespart werden. Ferner kann die in das Sensorelement integrierte Signalleiterstruktur beispielsweise durch die Abschirmungsschicht vor äußeren Störsignalen abgeschirmt werden, wodurch eine zuverlässige Übertragung von Mess- und/oder Steuersignalen sichergestellt wird.

In einer weiteren bevorzugten Ausgestaltung der Erfindung weist die Messleiterstruktur (bzw. deren Leiterbahn(en)) und/oder die Signalleiterstruktur (bzw. deren Leiterbahn(en)) zumindest eine elektrische Kontaktierungsstelle auf, die quer zur Schichtebene des Sensorelements freigelegt ist. In anderen Worten befindet sich oberhalb der Kontaktierungsstelle kein Material der ggf. vorhandenen Isolationsschicht, Abschirmungsschicht und/oder Schutzschicht, was eine elektrische Kontaktierung des Sensorelements vereinfacht.

In einer weiteren bevorzugten Ausgestaltung der Erfindung erstreckt sich das Sensorelement über zumindest 20 % der Gesamtlänge des Riemens, bevorzugt über zumindest 50 % der Gesamtlänge des Riemens, besonders bevorzugt über zumindest 80 % der Gesamtlänge des Riemens.

Gemäß dem bereits vor- sowie dem weiter unten Nachbeschriebenen wird die eingangs gestellte Aufgabe auch durch eine Antriebsvorrichtung, insbesondere ein Riemengetriebe oder einen Linearantrieb, mit den Merkmalen des Anspruchs 9 gelöst.

In einer bevorzugten Ausgestaltung der erfindungsgemäßen Antriebsvorrichtung weist die Antriebsvorrichtung eine mit dem Sensorelement signalübertragend verbundene Auswerteeinheit auf, die dazu ausgebildet ist, die von der mechanischen Eigenschaft des Riemens abhängige elektrische Eigenschaft der Messleiterstruktur zu erfassen und daraus die mechanische Eigenschaft des Riemens zu bestimmen.

Das Sensorelement ist mit der Auswerteeinrichtung kabelgebunden oder funkbasiert datenübertragend verbunden. Beispielsweise können Sensorelement und Auswerteeinrichtung mit entsprechenden Kommunikationsschnittstellen zur drahtlosen Kommunikation versehen sein. Die zur drahtlosen Kommunikation vorgesehene Schnittstelle des Sensorelements kann beispielsweise an dem Riemen angeordnet oder in dem Riemen eingebettet sein.

Als mechanische Eigenschaft des Riemens, die mittels des Sensorelements erfasst werden kann, kommen beispielsweise eine Längenänderung des Riemens oder eines Riemenlängsabschnitts und/oder eine Biegung des Riemens oder des Riemenlängsabschnitts in Betracht. Bevorzugt ist die Auswerteeinrichtung dazu konfiguriert, die Anzahl der Längenänderungen und/oder Biegungen des Riemens oder des Riemenlängsabschnitts über die Betriebsdauer aufzuzeichnen und daraus den Verschleißzustand des Riemens zu bestimmen. Beispielsweise kann bei Überschreiten einer vorbestimmten Anzahl an Längenänderungen und/oder Biegungen des Riemens ein kritischer Verschleißzustand des Riemens erkannt werden. Ferner kann die Auswerteeinrichtung dazu konfiguriert sein, zu bestimmen, ob es sich bei der erkannten Längenänderung um eine elastische oder plastische Längenänderung handelt. Beispielsweise kann eine plastische Längenänderung, die einen kritischen Verschleißzustand des Riemens darstellt, dadurch erkannt werden, dass sich die ermittelte Länge des Riemens oder die ermittelte Länge eines Riemenlängsabschnitts dauerhaft gegenüber einer vorbekannten Nominallänge vergrößert hat.

Bevorzugt ist die Auswerteeinrichtung dazu konfiguriert, bei Erkennen des Verschleißzustands des Riemens ein den Verschleißzustand des Riemens indizierendes Ausgabesignal zu erzeugen und/oder weiterzuleiten. Auf diese Weise kann die Arbeitsmaschine anhand des Ausgabesignals gesteuert, z.B. in ihrer Leistung gedrosselt, werden oder ein Benutzer der Arbeitsmaschine auf den Verschleißzustand des Riemens hingewiesen werden. Beispielsweise kann der Benutzer darauf hingewiesen werden, dass der Riemen bald einen kritischen Verschleißzustand erreicht und deshalb demnächst ausgewechselt werden muss.

Insbesondere ist die Auswerteeinrichtung dazu konfiguriert bei Erkennen eines kritischen Verschleißzustands ein Ausgabesignal zu erzeugen und/oder weiterzuleiten, dass den kritischen Verschleißzustand indiziert. Beispielsweise kann das Ausgabesignal eine Warnmeldung oder ein Alarmsignal sein, die einen Benutzer der Arbeitsmaschine auf den kritischen Verschleißzustand des Riemens hinweist, so dass der Benutzer den Riemen reparieren oder austauschen kann.

Gemäß dem bereits vor- sowie dem weiter unten nachbeschriebenen wird die eingangs gestellte Aufgabe auch durch eine Fördervorrichtung, insbesondere ein Regalbediengerät oder eine Aufzugsanlage, mit den Merkmalen des Anspruchs 11 gelöst.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand der unabhängigen Ansprüche kombinierbar sind.

Abwandlungen und Ausgestaltungen der Erfindung sowie weitere Vorteile und Einzelheiten der Erfindung lassen sich der nachfolgenden gegenständlichen Beschreibung und den Zeichnungen entnehmen. In den schematischen Figuren zeigen:
- Fig. 1: eine Ausführungsform eines erfindungsgemäßen Riemens in einer Querschnittsansicht;
- Fig. 2: eine weitere Ausführungsform eines erfindungsgemäßen Riemens in einer Draufsicht;
- Fig. 3: eine weitere Ausführungsform eines erfindungsgemäßen Riemens in einer Draufsicht;
- Fig. 4: eine weitere Ausführungsform eines erfindungsgemäßen Riemens in einer Draufsicht;
- Fig. 5: eine weitere Ausführungsform eines erfindungsgemäßen Riemens in einer Draufsicht;
- Fig. 6: eine weitere Ausführungsform eines erfindungsgemäßen Riemens in einer Querschnittsansicht;
- Fig. 7: eine weitere Ausführungsform eines Sensorelements in einer isometrischen Ansicht;

Gleich oder ähnlich wirkende Teile sind - sofern dienlich - mit identischen Bezugsziffern versehen.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden.

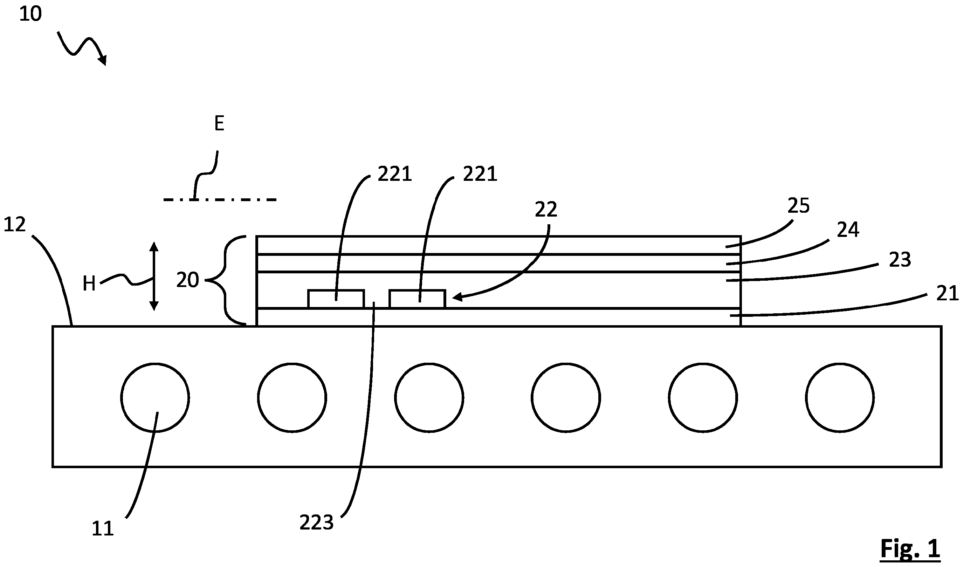

Fig. 1 zeigt eine Ausführungsform eines erfindungsgemäßen Riemens 10, der beispielsweise als Antriebsriemen oder Fördergurt ausgebildet sein kann, enthaltend ein polymeres Material mit darin eingebetteten und sich in Längsrichtung des Riemens erstreckenden Zugträgern 11. Der Antriebsriemen 10 umfasst ein mehrschichtiges, streifenförmiges Sensorelement 20 zur Erfassung einer mechanischen Eigenschaft des Riemens 10, wobei das Sensorelement 20 eine gedruckte Messleiterstruktur 22 mit einer von der mechanischen Eigenschaft des Riemens 10 abhängigen elektrischen Eigenschaft aufweist, deren Größe erfassbar ist. Das Sensorelement 20 definiert eine gedachte Schichtebene E. In einer quer zur Schichtebene E verlaufenden Höhenrichtung H werden die jeweiligen (Schicht-)Dicken für die Schichten und Bestandteile des Sensorelements 20 gemessen. Das Signalleitungselement 20 ist lediglich zu Anschauungszwecken in Relation zum Riemen 10 deutlich größer dargestellt.

Durch die gedruckte Messleiterstruktur 22 kann ein äußerst flaches und kompaktes Sensorelement 20 mit einer hohen Empfindlichkeit realisiert werden. Das Sensorelement 20 ist dabei ausreichend flexibel und robust herstellbar, so dass es platzsparend unmittelbar an dem Riemen befestigt werden kann, da es den auf den Riemen 10 wirkenden Belastungen standhält. In der vorliegenden Ausführungsform ist die Messleiterstruktur 22 auf einer flachen Seite 12 des Riemens 10 befestigten, insbesondere geklebten oder laminierten, flexiblen Trägerschicht 21 des Sensorelements 20 aufgedruckt. Alternativ kann die Messleiterstruktur 22 auf der flachen Seite 12 des Riemens 10 aufgedruckt sein. Falls der Riemen 10 ein Antriebsriemen ist, kann die flache Seite 12 der Riemenrücken des Antriebsriemens sein.

In der vorliegenden Ausführungsform weist das Sensorelement 20 eine auf der gedruckten Messleiterstruktur 22 angeordnete, insbesondere gedruckte Isolationsschicht 23 enthaltend ein dielektrisches Material auf. Die Messleiterstruktur 22 wird auf diese Weise durch die Isolationsschicht 23 und weitere Schichten 24, 25 vor äußeren Einflüssen geschützt. Die Zwischenräume 223 zwischen den Strukturen der Messleiterstruktur 22, wie Leiterbahnen 221, 224, mit dem dielektrischen Material der Isolationsschicht 23 gefüllt. Dies kann beim Herstellen der Isolationsschicht 23 mittels Druckverfahren in einfacher Weise realisiert werden. In der vorliegenden Ausführungsform ist die Messleiterstruktur 22 in dem dielektrischen Material der Isolationsschicht 23 eingebettet, wodurch die Messleiterstruktur besser vor äußeren Einflüssen geschützt ist.

In der vorliegenden Ausführungsform weist die Sensoreinrichtung 20 eine auf der Isolationsschicht 23 angeordnete, insbesondere gedruckte Abschirmungsschicht 24 enthaltend ein elektrisch leitfähiges Material, und eine auf der Abschirmungsschicht 24 angeordnete, insbesondere gedruckte Schutzschicht 25 enthaltend ein dielektrisches Material auf. Durch die Abschirmungsschicht 24 können auf das System wirkende äußere Störsignale wirksam unterdrückt werden, wodurch eine zuverlässige Erfassung der elektrischen Eigenschaft der Messleiterstruktur 22 sichergestellt wird. Die Abschirmungsschicht 24 ist durch die Isolationsschicht 23 von der Messleiterstruktur 22 elektrisch isoliert. Die Schutzschicht 25 schützt die Abschirmungsschicht 24 vor äußeren Einflüssen.

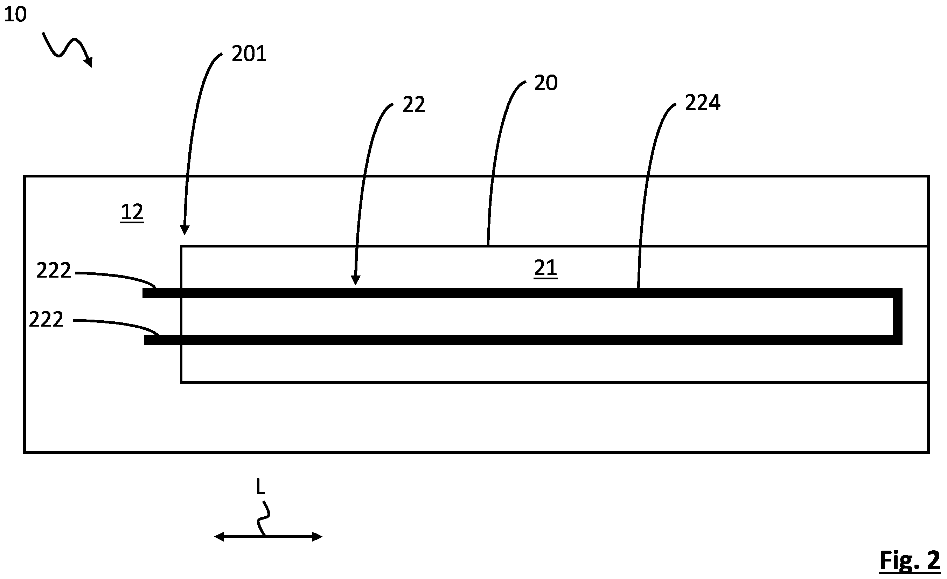

Fig. 2 bis 5 zeigen weitere Ausführungsformen des erfindungsgemäßen Riemens 10. Diese Ausführungsformen können analog zu der in Fig. 1 gezeigten Ausführungsform ebenfalls eine Isolationsschicht 23, eine Abschirmungsschicht 24 und/oder eine Schutzschicht 25 enthalten. Die Messleiterstruktur 22 weist an einem Ende 201 des Sensorelements elektrische Kontaktierungsstellen 222 auf, die quer zur Schichtebene E des Sensorelements 20 freigelegt ist, was die elektrische Kontaktierung erleichtert.

Fig. 2 zeigt einen erfindungsgemäßen Riemen 10, wobei die Messleiterstruktur 22 eine sich in Längsrichtung L des Riemens 10 erstreckende, u-förmige Leiterbahn 224 aufweist, mit der ein elektrischer Widerstand der Leiterbahn 224 als elektrische Eigenschaft der Messleiterstruktur 22 erfasst werden kann.

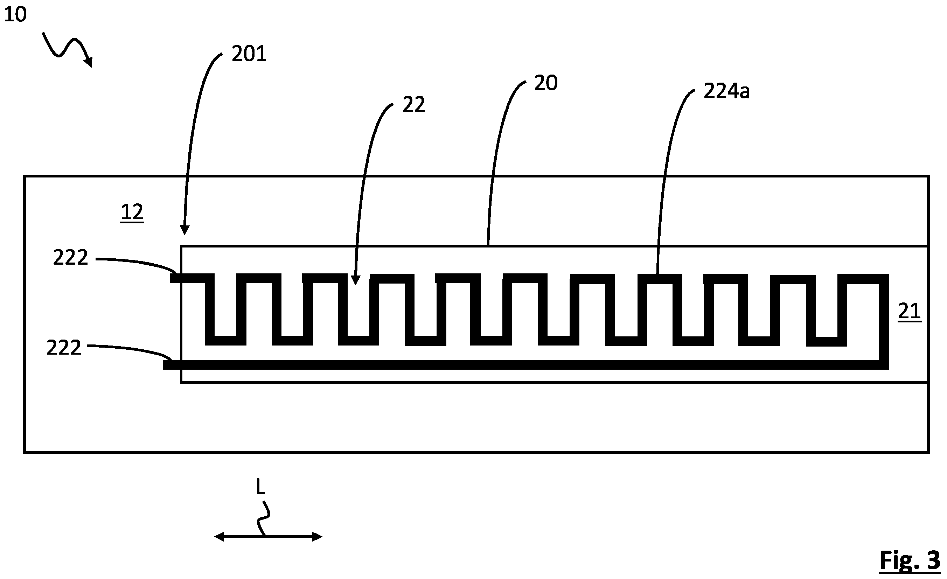

Fig. 3 zeigt einen erfindungsgemäßen Riemen 10, wobei die Messleiterstruktur 22 eine sich in Längsrichtung L des Riemens 10 mäanderförmig erstreckende Leiterbahn 224a aufweist, mit der ein elektrischer Widerstand der Leiterbahn 224a als elektrische Eigenschaft der Messleiterstruktur erfasst werden kann.

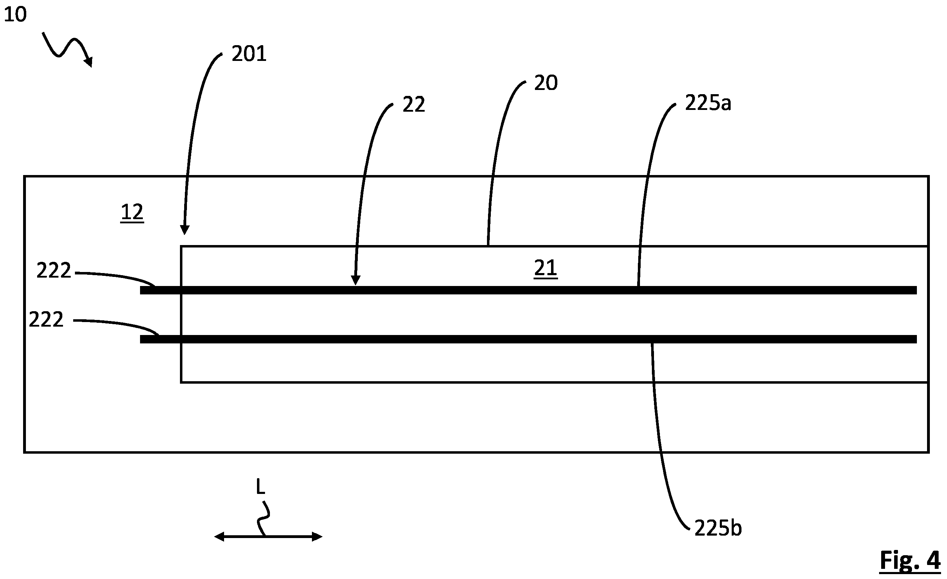

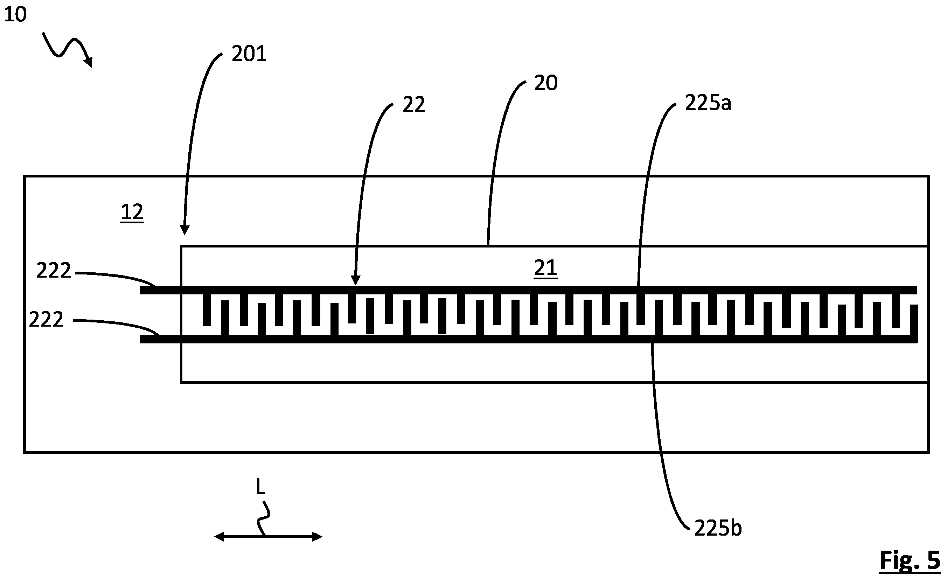

Fig. 4 zeigt einen erfindungsgemäßen Riemen 10, wobei die Messleiterstruktur 22 zwei sich in Längsrichtung L des Riemens 10 erstreckende Elektroden 225a, 225b aufweist, zwischen denen eine Kapazität als elektrische Eigenschaft der Messleiterstruktur 22 erfasst werden kann. Fig. 5 zeigt eine Variation des Riemens 10 aus Fig. 4 mit kammartig ineinandergreifend ausgebildeten Elektroden 225a, 225b.

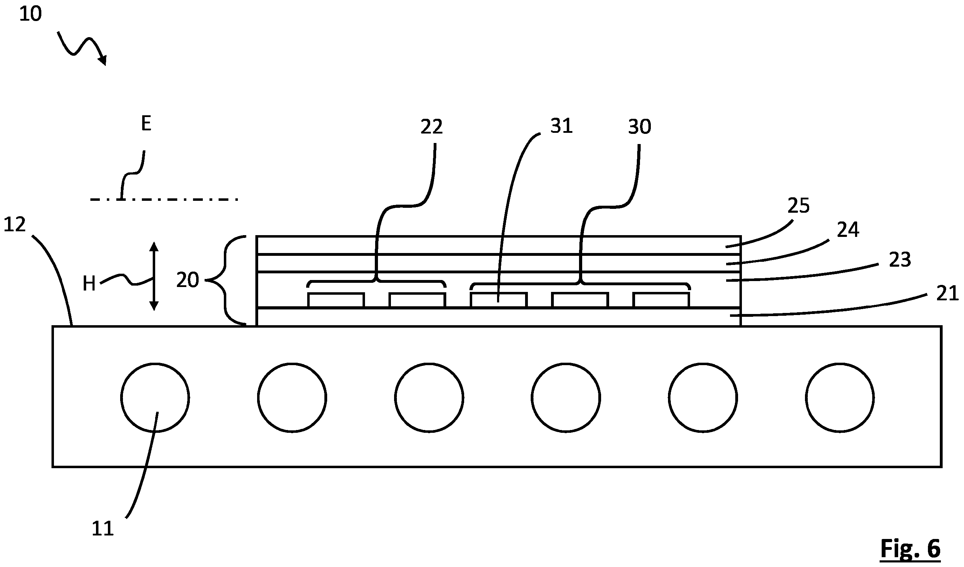

Fig. 6 zeigt eine weitere Ausführungsform des erfindungsgemäßen Riemens 10, ähnlich der in Fig. 1 gezeigten Ausführungsform, das Sensorelement 20 eine gedruckte Signalleiterstruktur 30 aufweist, wobei die Signalleiterstruktur 30 zumindest eine sich in Längsrichtung L des Riemens 10 erstreckende Leiterbahn 31 mit zwei in Längsrichtung L des Riemens 10 voneinander beabstandeten Enden, zwischen denen Steuersignale übertragbar sind, aufweist. Eine in das Sensorelement 20 integrierte Signalleiterstruktur 30 bietet eine vorteilhafte Kombinationslösung, bei der neben der Zustandsüberwachung des Riemens 10 auch die Übertragung von Mess- und/oder Steuersignalen ermöglicht wird.

In allen gezeigten Ausführungsformen kann der Riemen 10 mit einer Abschirmungsschicht 24 versehen sein, die eine gedruckte leitfähige, insbesondere metallische Abschirmungsstruktur 241 enthält. Die Abschirmungsstruktur 241 kann in zumindest einem Längsabschnitt L1 des Sensorelements 20
- als vollflächige Schicht und/oder
- als flexibles Lochgitter mit einer Vielzahl von Löchern 242 ausgebildet sein.

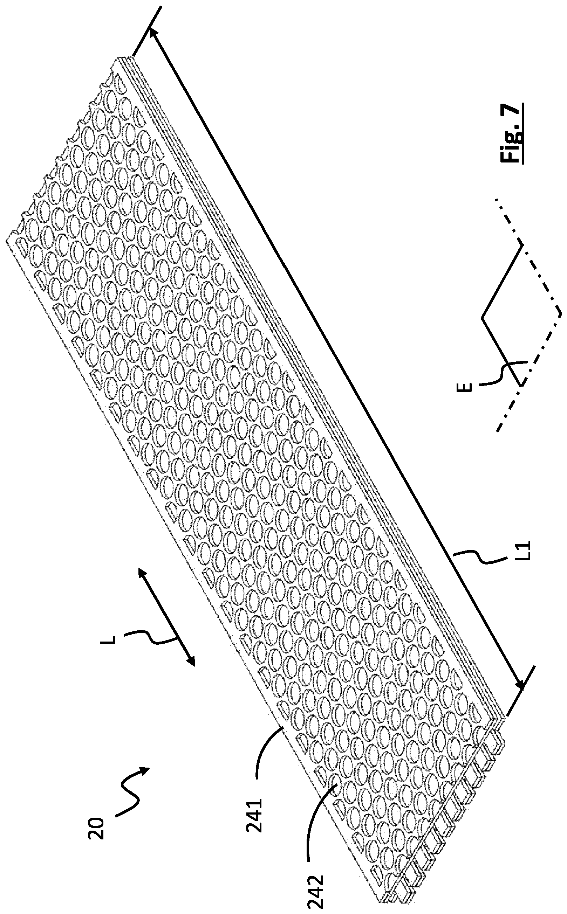

Fig. 7 zeigt eine Ausführungsform des Sensorelements 20, bei dem die Schutzschicht 25 nicht gezeigt ist. Das Sensorelement 20 weist eine Abschirmungsschicht 24 mit einer gedruckten und leitfähigen Abschirmungsstruktur 241 auf, die als flexibles Lochgitter mit einer Vielzahl von (im vorliegenden Fall runden) Löchern 242 ausgebildet ist. Derartige Lochstrukturen lassen sich in einfacher Weise mittels bewährter Druckverfahren zuverlässig herstellen, was z.B. gegenüber einer vollflächigen Schicht die Kosten und das Gewicht des Sensorelements 20 senkt. Ferner kann durch Anpassung der Anordnung und der Größe der Löcher 242 die Abschirmwirkung der Abschirmungsstruktur 241 gezielt auf die abzuschirmenden Störsignale abgestimmt werden. Es sind neben runden und elliptischen Formen der Löcher auch rechteckige oder polygone Formen denkbar.

Ergänzend sei darauf hingewiesen, dass "aufweisend" keine anderen Elemente oder Schritte ausschließt und "ein" oder "eine" keine Vielzahl ausschließt.

Der Schutzbereich der vorliegenden Erfindung ist durch die Patentansprüche gegeben und wird durch die in der Beschreibung erläuterten oder den Figuren gezeigten Merkmale nicht beschränkt.

## Patentansprüche

1. Riemen (10), insbesondere Antriebsriemen oder Fördergurt, enthaltend ein polymeres Material insbesondere mit darin eingebetteten und sich in Längsrichtung des Riemens erstreckenden Zugträgern (11), **gekennzeichnet durch** ein insbesondere streifenförmiges Sensorelement (20) zur Erfassung einer mechanischen Eigenschaft des Riemens (10), wobei das Sensorelement (20) eine gedruckte Messleiterstruktur (22) mit einer von der mechanischen Eigenschaft des Riemens (10) abhängigen elektrischen Eigenschaft aufweist, deren Größe erfassbar ist.

2. Riemen (10) nach Anspruch 1, wobei die Messleiterstruktur (22) eine insbesondere u-förmige Leiterbahn (224) und/oder eine sich in Längsrichtung (L) des Riemens mäanderförmig erstreckende Leiterbahn (224a) aufweist, mit der ein elektrischer Widerstand der Leiterbahn (224) bzw. der Leiterbahn (224a) als elektrische Eigenschaft der Messleiterstruktur (22) erfasst werden kann.

3. Riemen (10) nach Anspruch 1 oder 2, wobei die Messleiterstruktur (22) zwei sich in Längsrichtung (L) des Riemens (10) erstreckende Elektroden (225a, 225b) aufweist, zwischen denen eine Kapazität als elektrische Eigenschaft der Messleiterstruktur (22) erfasst werden kann.

4. Riemen (10) nach einem der vorangehenden Ansprüche, wobei die Messleiterstruktur (22) auf einer flachen Seite (12) des Riemens (10) oder auf einer an der flachen Seite (12) des Riemens (10) befestigten, insbesondere geklebten oder laminierten, flexiblen Trägerschicht (21) des Sensorelements (20) aufgedruckt ist.

5. Riemen (10) nach einem der vorangehenden Ansprüche, wobei das Sensorelement (20) eine auf der gedruckten Messleiterstruktur (22) angeordnete, insbesondere gedruckte Isolationsschicht (23) enthaltend ein dielektrisches Material aufweist.

6. Riemen (10) nach Anspruch 5, wobei die Sensoreinrichtung (20) eine auf der Isolationsschicht (23) angeordnete, insbesondere gedruckte Abschirmungsschicht (24) enthaltend ein elektrisch leitfähiges Material, und optional eine auf der Abschirmungsschicht (24) angeordnete, insbesondere gedruckte Schutzschicht (25) enthaltend ein dielektrisches Material aufweist.

7. Riemen (10) nach Anspruch 6, wobei die Abschirmungsschicht (24) eine gedruckte leitfähige, insbesondere metallische Abschirmungsstruktur (241) enthält, insbesondere wobei die Abschirmungsstruktur (241) in zumindest einem Längsabschnitt (L1) des Sensorelements (20)
- als vollflächige Schicht und/oder
- als flexibles Lochgitter mit einer Vielzahl von Löchern (242) ausgebildet ist.

8. Riemen (10) nach einem der vorangehenden Ansprüche, wobei das Sensorelement (20) eine insbesondere von der Isolationsschicht (23) bedeckte, gedruckte Signalleiterstruktur (30) aufweist, wobei die Signalleiterstruktur (30) zumindest eine sich in Längsrichtung (L) des Riemens (10) erstreckende Leiterbahn (31) mit zwei in Längsrichtung (L) des Riemens (10) voneinander beabstandeten Enden, zwischen denen Steuersignale übertragbar sind, aufweist.

9. Antriebsvorrichtung, insbesondere Riemengetriebe oder Linearantrieb, mit einem als Antriebsriemen ausgebildeten Riemen (10) nach einem der vorangehenden Ansprüche.

10. Antriebsvorrichtung nach Anspruch 9, mit einer mit dem Sensorelement (20) signalübertragend verbundenen Auswerteeinheit, die dazu ausgebildet ist, die von der mechanischen Eigenschaft des Riemens (10) abhängige elektrische Eigenschaft der Messleiterstruktur (22) zu erfassen und daraus die mechanische Eigenschaft des Riemens (10) zu bestimmen.

11. Fördervorrichtung, insbesondere Regalbediengerät oder Aufzugsanlage, mit einer Antriebsvorrichtung nach Anspruch 9 oder 10.
